# EUROPEAN PATENT SPECIFICATION

(11) **EP 3 014 819 B1**
(45) Date of publication and mention of the grant of the patent: **14.03.2018**
(21) Application number: 14835264.4
(22) Date of filing: 05.08.2014
(51) Int. Cl.: H04L 12/24, H04L 12/46

(54) **METHOD FOR PACKET TUNNELING THROUGH SOFTWARE DEFINED NETWORK METHOD OF INTELLIGENTLY CONTROLLING FLOW OF A PACKET THROUGH SOFTWARE DEFINED NETWORK AND SYSTEM**
VERFAHREN ZUR PAKETTUNNELUNG DURCH SOFTWAREDEFINIERTES NETZWERK, VERFAHREN ZUR INTELLIGENTEN STEUERUNG EINES PAKETFLUSSES DURCH EIN SOFTWAREDEFINIERTES NETZWERK UND SYSTEM
PROCÉDÉ DE TUNNELISATION DE PAQUETS PAR L'INTERMÉDIAIRE D'UN RÉSEAU DÉFINI PAR LOGICIEL, PROCÉDÉ DE COMMANDE INTELLIGENTE DE FLUX D'UN PAQUET PAR L'INTERMÉDIAIRE D'UN RÉSEAU DÉFINI PAR LOGICIEL ET SYSTÈME

(30) Priority: 05.08.2013 US 201361862400 P
(43) Date of publication of application: 04.05.2016
(73) Proprietor: Huawei Technologies Co., Ltd., Longgang District Shenzhen, Guangdong 518129 (CN)
(72) Inventor: HUANG, Jing, Shenzhen Guangdong 518129 (CN); ZOU, Ting, Santa Clara, California 95050 (US); ZHA, Min, Shenzhen Guangdong 518129 (CN); LU, Xushan, Shenzhen Guangdong 518129 (CN)
(74) Representative: Gill Jennings & Every LLP
(86) International application number: PCT/CN2014/083720
(87) International publication number: WO 2015/018323

(56) References cited:
- WO-A1-2013/104375
- CN-A- 103 051 539
- CN-A- 103 067 245
- US-A1- 2013 058 215
- US-A1- 2013 176 850

## Description

### TECHNICAL FIELD

Embodiments of the present invention relate to the communications field, and in particular, to a method for packet tunneling through a software defined network (SDN), a method of intelligently controlling flow of a packet through an SDN network, and a system for tunneling used in an SDN.

### BACKGROUND

The conventional Software defined network (SDN) technologies, e.g., the Openflow protocol used to interface an SDN controller and an SDN switch, can only provide limited support to selected tunneling technologies or protocols, such as GRE, MPLS, VLAN. Many commonly used tunneling protocols, such as IP-in-IP tunnel, VXLAN, NVGRE, and etc., are typically not supported by the conventional art. Moreover, based on the conventional technologies, an SDN system implementation typically is customized to support a specific tunneling technology, e.g., making decisions solely based on local logic depending on a packet. If an SDN system implementation is to be used to support more tunneling technologies, the forwarding plan tends to become undesirably complicated and usually involve update with each added tunneling technology.

US 2013/0058215 A1 provides a virtualizer for managing a plurality of managed switching elements that forward data through a network. The virtualizer comprises a first set of tables for storing input logical forwarding plane data and a second set of tables for storing output physical control plane data. The document also describes a table mapping engine for mapping the input logical forwarding plane data in the first set of tables to output physical control plane data in the second set of tables by performing a set of database join operations on the input logical forwarding plane data in the first set of tables. In some embodiments, the physical control plane data is subsequently translated into physical forwarding behaviors that direct the forwarding of data by the managed switching elements.

US 2013/0176850 A1 provides a method enabling a switch in a split-architecture network to provide high speed packet processing and enhanced network functionalities that are not supported by the OpenFlow. The switch receives a packet from a network through an input port of the switch, and matches header fields in the packet against table entries in flow tables to identify an action to be taken. The flow tables are part of an OpenFlow pipeline. The identified action is to direct the packet to a designated processing unit in the switch. The OpenFlow pipeline forwards the packet to the designated processing unit via a communication channel in the switch. The designated processing unit processes the packet with the enhanced network functionalities, and injects the packet back to one of the flow tables before transmission of the packet to the network through an egress port of the switch.

### SUMMARY

An objective of embodiments of the present invention is to provide a communication method for packet tunneling through an SDN, a computer implemented method of intelligently controlling flow of a packet through an SDN network, and a system for tunneling used in an SDN.

The technical solutions of the embodiments of the present invention include the following content -

A communication method for packet tunneling through an SDN includes:
receiving, by an SDN controller, programmable instructions, wherein the programmable instructions includes primitive operations regarding processing a packet for tunneling in accordance with a tunneling protocol; and
configuring, by the SDN controller, in a flow table in accordance with the programmable instructions,
wherein the primitive operations comprise pushing metadata operations for an SDN switch at a tunnel entry point, and/or popping metadata operations for an SDN switch at a tunnel exit point, wherein the metadata comprise information for processing a packet for tunneling.

Optionally, said programmable instructions are transparent to said SDN switch.

Optionally, the tunneling protocol is selected from a group consisting of MPLS, PBB, IPv4-in-IPv6, IPv6-in-IPv4, GRE, VXLAN, NVGRE, GPRS, PPPoE, and CAPWAP.

A software defined network, SDN, controller, wherein the SDN controller is configured to:
receive programmable instructions, wherein the programmable instructions include primitive operations regarding processing a packet for tunneling in accordance with a tunneling protocol; and
configure a flow table in accordance with the programmable instructions,
wherein the primitive operations comprise pushing metadata operations for an SDN switch at a tunnel entry point, and/or popping metadata operations for an SDN switch at a tunnel exit point, wherein the metadata comprise information for processing a packet for tunneling.

A system for tunneling used in an SDN includes:
an SDN controller, configured to receive programmable instructions, wherein the programmable instructions include primitive operations regarding processing a packet for tunneling in accordance with a tunneling protocol;
the SDN controller is further configured to configure a flow table in accordance with the programmable instructions; the system further comprising:
   an SDN switch, coupled to said SDN controller and configured to perform actions based on said flow table to distribute said packet in accordance with said tunneling protocol through said SDN network,
   wherein the primitive operations comprise pushing metadata operations for an SDN switch at a tunnel entry point, and/or popping metadata operations for an SDN switch at a tunnel exit point, wherein the metadata comprise information for processing a packet for tunneling.

Optionally, the instructions are independent of the SDN switch.

Optionally, the tunneling protocol is selected from a group consisting of MPLS, PBB, IPv4-in-IPv6, IPv6-in-IPv4, GRE, VXLAN, NVGRE, GPRS, PPPoE, and CAPWAP.

A comparative example there is provided a computer implemented method of intelligently controlling flow of a packet through an SDN network, said method comprising configuring primitive operations regarding processing a packet for tunneling in accordance with a tunneling protocol,
wherein said primitive operations comprise adding tunneling information to and/or removing tunneling information from a packet in accordance with said tunneling protocol,
wherein said primitive operations are used by an SDN controller to configure a flow table, and
wherein said flow table is used by an SDN switch to perform said primitive operations to distribute and/or receive a packet in accordance with said tunneling protocol.

Optionally, where said primitive operations are configured as respective data structures.

Optionally, where said SDN switch generic with respect to tunneling protocols.

An advantage of the embodiments of the present invention is that the method may enable an SDN system to support multiple tunneling technologies without complicating the implementation of an SDN switch, and may enable the SDN system to support new tunneling technologies that have not been supported by the conventional art without the need for updating the SDN switch, which implementing packet tunneling through an SDN and reducing complexity of the SDN switch.

### BRIEF DESCRIPTION OF DRAWINGS

To illustrate the technical solutions in the embodiments of the present invention more clearly, the accompanying drawings required for describing the embodiments are briefly described in the following. Apparently, the accompanying drawings in the following description merely show some embodiments of the present invention, and persons of ordinary skill in the art may still derive other drawings from the accompanying drawings without creative efforts.
FIG. 1 is a schematic structural diagram of an SDN network according to an embodiment of the present invention;
FIG. 2 is a flowchart of implementing a method according to an embodiment of the present invention;
FIG. 3 is a schematic diagram of a packet format that can be used for PBB tunneling protocol according to an embodiment of the present invention;
FIG. 4A is a schematic diagram of a packet format that can be used for DS-Lite tunneling protocol according to an embodiment of the present invention;
FIG. 4B is a schematic structural diagram of an SDN network that employs a DS-Lite tunneling method according to an embodiment of the present invention;
FIG. 5 is a schematic diagram of a VxLAN header format according to an embodiment of the present invention;
FIG. 6 is a schematic diagram of an NVGRE header format according to an embodiment of the present invention;
FIG. 7 is a schematic diagram of an MPLS header format according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by a person of ordinary skill in the art based on the embodiments of the present invention without creative efforts shall fall within the protection scope of the present invention.

Therefore, it would be advantageous to provide a method to enable an SDN system to support multiple tunneling technologies without complicating the implementation of an SDN switch. It would also be advantageous to enable an SDN system to support new tunneling technologies that have not been supported by the conventional art without the need for updating the SDN switch.

Accordingly, the embodiments of the present disclosure employ an application program comprising instructions to configure an SDN switch flow table with primitive operations to implement tunneling. The primitive operations comprise adding tunneling information to, or encapsulating, a packet at an entry-point of a tunnel, and removing the tunneling information from, or decapsulating, a packet at an exit-point of a tunnel. The tunneling information may comprise header information as dictated by specifications of respective well known packet formats. The primitive operations may comprise pushing and popping the header information to configure a tunneling packet. Embodiments of the present disclosure may also push the tunneling information to metadata. The primitive operations may be implemented as data structures in an application program. An SDN controller, e.g., a centralized controller, can configure a flow table within an individual SDN switch based on the primitive operations as well as other instructions provided by the application program. The individual SDN switch can then take actions with respect to the packet based on the flow table. Therefore, the details of tunneling technology are placed in the application programs, while SDN switches are used to implement a set of primitive operations. This mechanism advantageously offers a generalized and extendable approach to support a wide variety of tunneling technologies, including non-standard tunneling technologies

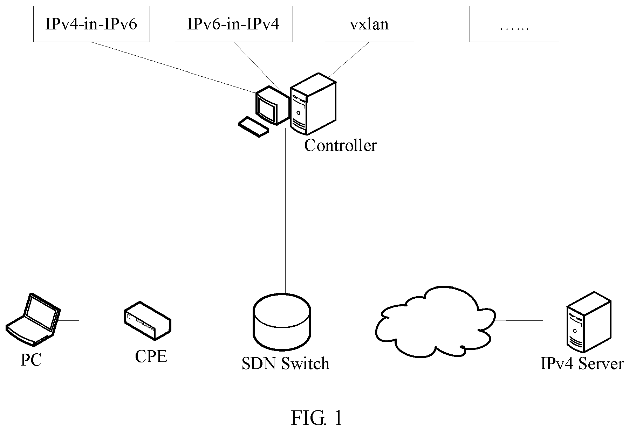

Fig. 1 is a block diagram illustrating an exemplary SDN network of a data transmission network capable of supporting a diversity of tunneling technologies in accordance with an embodiment of the present disclosure. A variety of application programs, e.g., including instructions for tunneling packets, can configure SDN switches on the network to adapt the data packets from one protocol to another. A tunneling application program is specific to the respective tunneling technology, e.g., IPv4-in-IPv6, IPv6-in-IPv4, Vxland, etc. Such a program may contain details of a tunneling technology for processing data packets, such as pushing and popping a corresponding header. However, the tunneling technologies can be transparent to the SDN switches that execute instructions defined by the tunneling application program. Therefore, a generic SDN switch may be advantageously capable of supporting a variety of tunneling technologies.

As will be appreciate by those skilled in the art, the present disclosure is not limited to any specific type of tunneling technology. To name a few, the present disclosure can support MPLS, PBB, IP-in-IP (IPv4-in-IPv6, IPv6-in-IPv4), GRE, VXLAN, NVGRE, GPRS, PPPoE, CAPWAP, and so on.

**Table 1**

| |
|---|
| Struct push_mac { |
| src_mac; |
| dst_mac; |
| ethertype; |
| } |
| struct pop_mac { |
| // no parameter |
| } |

Table 1 provides exemplary data structures defining actions for pushing and popping a MAC header on a packet in accordance with an embodiment of the present disclosure. The push_mac operation can be performed at a tunnel entry point to add the header to a packet, and the pop_mac operation can be performed at a tunnel node exit-point to remove the header from the packet. The parameters, e.g., src_mac, dst_mac, ethertype, are defined as dictated by the MAC protocol. In some embodiment, the MAC header is pushed/popped as the outmost header of a packet, e.g., as a default.

**Table 2**

| |
|---|
| Struct push_vlan { |
| position; // where to push |
| ethertype; |
| vlanid; |
| priority; |
| } |
| struct pop_vlan { |
| position; // where to pop |
| } |

Table 2 provides exemplary data structures defining operations pushing and popping a VLAN header on a packet in accordance with an embodiment of the present disclosure. The pushing data structure comprises the position of the packet to push the header, the Ethernet type, the VLAN ID, and the priority. The popping data structure comprises a position to pop the header, such as the outmost header or the header following the MAC header.

| |
|---|
| Struct push_ip { |
| position; //where to push |
| af; // ipv4, ipv6 address family |
| src_addr; //source IP address |
| dst addr; //destination IP address |
| protocol; //IP header protocol type |
| } |
| struct pop_ip { |
| position; // where to pop |
| af; // ipv4, ipv6 address family |
| } |

Table 3 provides exemplary data structures defining operations for pushing and popping an IP header on a packet in accordance with an embodiment of the present disclosure. In this example, the data structures do not include all the header fields dictated by a IP packet format. As will be appreciated by those skilled in the art, other parameters for additional header fields can be added to the data structure in some embodiments. In some embodiments, an SDN switch may be capable of filling in the default values for header fields unspecified in the data structures while performing the action. Alternatively, the values of those unspecified header fields can be derived from information included an inner layer header. For example, if the application program is configured for a IPv4-in-IPv6 tunnel, some header fields of the outer IPv6 packet header can be derived from the inner IPv4 packet header, such as TTL.

**Table 4**

| |
|---|
| Struct push_tp { |
| position; // where to push |
| protocol; // TCP/UDP |
| src_port; //source port |
| dst_port; //destination port |
| } |
| struct pop_tp { |
| position; // where to pop |
| protocol; // TCP/UDP |
| } |

Table 4 provides exemplary data structures defining operations for pushing and popping a transportation layer (TCP/UDP) header on a packet in accordance with an embodiment of the present disclosure. For example, the position specifies where to push/pop the TCP/UDP header to a packet. For example, position=1 means pushing/popping a TCP/UDP header at the beginning of a packet, or position= 0 means pushing/popping a TCP/UDP header following a MAC header or the VLAN header if present. In this example, the data structures do not include all the header fields dictated by a TCP/UDP packet format. As will be appreciated by those skilled in the art, other parameters for additional header fields can be added to the data structure in some embodiments.

Requisite tunneling information to be added to a packet can also be added to a packet as metadata in accordance with embodiments of the present disclosure. This approach is particularly useful to support experimental, non-standard, or future new tunneling technologies. In some embodiments, the content of the metadata can be transparent to an SDN Switch. Thus a generic SDN switch can be used to support multiple tunneling protocols and new tunneling protocols, which may significantly simplify the implementation of the SDN switch, and circumvent the need for SDN switch update or upgrade in order to support new tunneling technologies. However, as will be appreciated by those skilled in the art, the present disclosure is not limited to any specific type of SDN switch. The SDN switch may only be generic with respect to selected tunneling protocols. It may include local logic customized for selected tunneling technologies but still capable of support other tunneling technologies in accordance with the primitive operations included in the API.

**Table 5**

| |
|---|
| Struct push metadata { |
| position; // where to push |
| length; //metadata length |
| metadata; //content of metadata |
| } |
| struct pop metadata { |
| position; //where to pop |
| len; // length to be popped |
| } |
| Struct metadata_to_flow { |
| position; |
| offset; //relative to the position |
| length; //less than or equal to the mask length |
| mask ; |
| } |
| Struct metadata_to_packet { |
| position; |
| offset; |
| length; // length |
| value; |
| } |

Table 5 provides exemplary data structures defining operations for pushing, popping and modifying metadata on a packet in accordance with an embodiment of the present disclosure. The parameter "mask" can be used to specify which bits to write/read. For example, if the total length is 64 bits and lower 16 bits are to be written, then the mask value can be 0x00 00 00 00 00 00 FF. The structure push_metadata comprises the position, length, and metadata content. In some embodiments, the position parameter can be selected from

Definition of position:
- 0: default (behind mac, vlan, ip, tcp/udp)
- 1: Starting point of a packet
- 2: Behind MAC
- 3: Behind VLAN
- 4: Behind IP
- 5: Behind TCP/UDP

The structure metadata_to_flow comprises parameters for extracting values from metadata and use them for flow table match. The structure metadata_to_packet defines parameters for modifying metadata section in a packet, for example change the a GRE packet.

**Table 6**

| |
|---|
| Struct flow { |
| src_mac; |
| dst_mac; |
| ...... |
| metadata; // e.g. 64bit |
| ...... |
| other fields |
| } |

When handling a packet encapsulated inside a tunneling header with metadata in it, part or all of the metadata in the header can be put into metadata field in a flow structure for flow table lookup. Table 6 is an exemplary flow structure that includes metadata field in accordance with an embodiment of the present disclosure. Such a data structure, or part of it, can be used as a key for flow table lookup. The metadata field in the structure can have fixed or variable length.

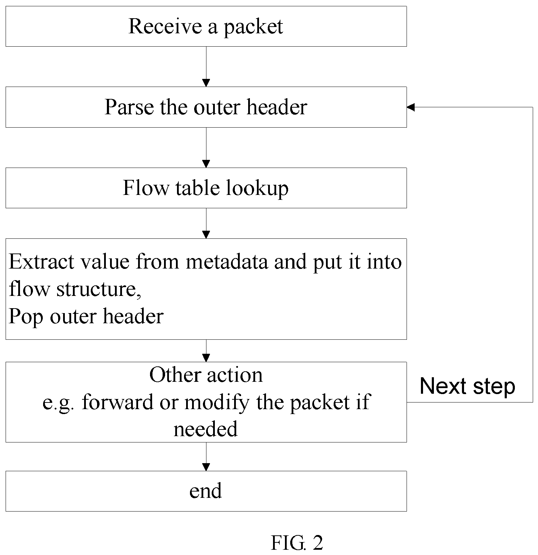

When an SDN switch receives a packet, it extracts relevant information from the packet for flow table look up, for example the information in the MAC header or IP header. For a field that can not be recognized by the SDN switch, e.g., the metadata field, the SDN switch may not be able to process the field and the corresponding tunneling protocols. Thus, the tunneling information as part of the metadata can be added to the flow table lookup to process, for example based on the TNI in the NVGRE or the VNI in VxLAN, without adding all the metadata to the lookup table. Fig. 2 is a flow chart illustrating an exemplary method of extracting a specified length of data from the metadata for flow table lookup. The flow lookup table can be provided by a corresponding application program including tunneling primitive operations. The lookup table comprises a metadata field storing information extracted from the packet metadata.

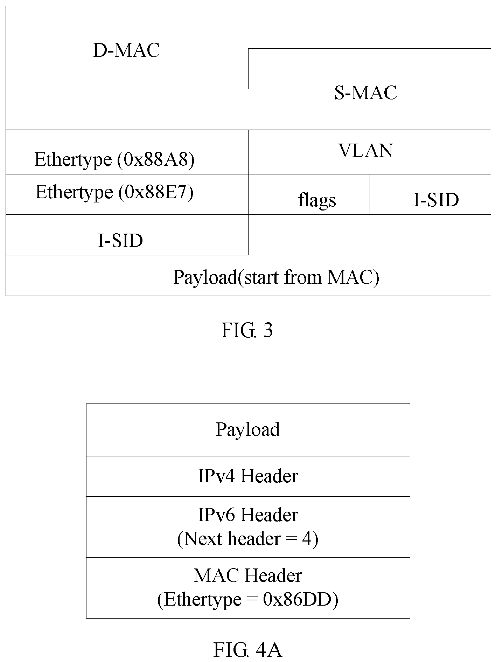

Fig. 3 illustrates an exemplary packet format that can be used for PBB tunneling protocol in accordance with an embodiment of the present disclosure. The PBB tunneling packet comprises a MAC header, a VLAN header, PBB fields including flags, 24 bits I-SID, and payloads. For instance, if a MAC packet with destination address of AA:BB:CC:DD:EE:FF is to be encapsulated in the tunnel, a PBB tunneling application program can distribute a flow table to the SDN switch, as show in Table 7.

**Table 7**

| |
|---|
| Match: |
| s-mac=AA:BB:CC:DD:EE:FF |
| Actions: |
| push_metadata(position=1, len=4bytes, medatada), |
| push_vlan(position=1,ethertype=0x88E7,vlanid,priotiry), |
| push_mac(position=1, s-mac,d-mac,ethertype=0x88A8) |

If an SDN switch receives a packet comprising a PBB encapsulation, it can perform a decapsulation process as shown in Table 8. As will be appreciated by those skilled in the art, any other suitable flow structure can be used to implement the similar method in accordance with the present disclosure.

**Table 8**

| |
|---|
| Table 0: |
| Match: |
| s-mac=AA:AA:AA:AA:AA:AA, |
| d-mac=BB:BB:BB:BB:BB:BB, |
| ethertype=0x88A8 |
| actions: pop_mac, goto_next_table(1) |
| |
| table 1: |
| Match: VLANID=xx,ethertype=0x88E7 |
| Actions: pop_vlan:position=1 |
| Metadata_to_flow: position=1, offset=1, len=3, mask=0xfff |
| Pop metadata: position=1,len=4 |
| Goto_next_table(2) |
| |
| Table 2: |
| Match: others |
| Actions: others |

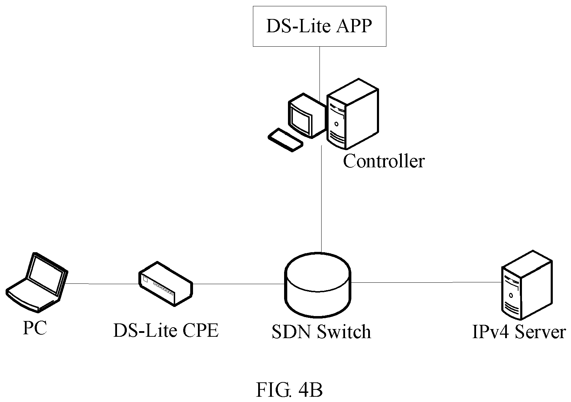

IP-in-IP tunnels, including IPv4-in-IPv6, IPv6-in-IPv4 are widely used in IPv6 transition technologies. For example, DS-Lite, MAP-E, LW4over6, 4RD, etc, make use of IPv4-in-IPv6 tunnel; and 6RD makes use of IPv6-in-IPv4 tunnel. Fig. 4A illustrates an exemplary packet format that can be used for DS-Lite (IPv4-in-IPv6) tunneling protocol in accordance with an embodiment of the present disclosure. Fig. 4B illustrates an exemplary SDN network that employs the DS-Lite tunneling method in accordance with an embodiment of the present disclosure.

**Table 9**

| |
|---|
| Actions in up stream direction: |
| Pop_mac: |
| Pop_ip: pos=1, af=ipv6 |
| modify-ip-src(A.B.C.D) |
| modify-src-port(EEFF) |
| Actions in down stream direction: |
| modify-ip-dst(a.b.c.d), |
| modify-src-port(eeff), |
| Pop-mac // pop old ethernet header |
| push-ip (pos=1, af=ipv6, src=hh:kk,dst=xx::yy, protocol=4) |
| Push-mac: s-mac, d-mac, ethertype=0x86DD |

Table 9 provides exemplary actions in an upstream direction and a downstream direction of a DS-Lite tunnel, respectively, in accordance with an embodiment of the present disclosure.

Table 10 provides exemplary instructions for push actions used in a IP-in-IP tunnel in accordance with an embodiment of the present disclosure. In this embodiment, when pushing an IP header, by default it is inserted behind MAC header; if VLAN header presents, it is inserted behind VLAN header. The Ethertype field in MAC header or VLAN header can be set to 0x800 if IPv4 header is inserted, and 0x86DD if IPv6 header is inserted.

If the payload above the inserted IP header is IPv4, then the protocol field of inserted IPv4 header or next-header field of IPv6 is set to 4. If the payload above the inserted IP header is IPv6, then the protocol field of inserted IPv4 header or next-header field of IPv6 can be set to 41. Other fields of inserted IP header can be derived from the IP header in payload, or take a default value. If the inserted IP header and the original IP header belong to different address families, e.g. IPv4 and IPv6, a mapping process can be used, which may result in loss of some field. The flow-label in IPv6 may not be mapped to IPv4 header.

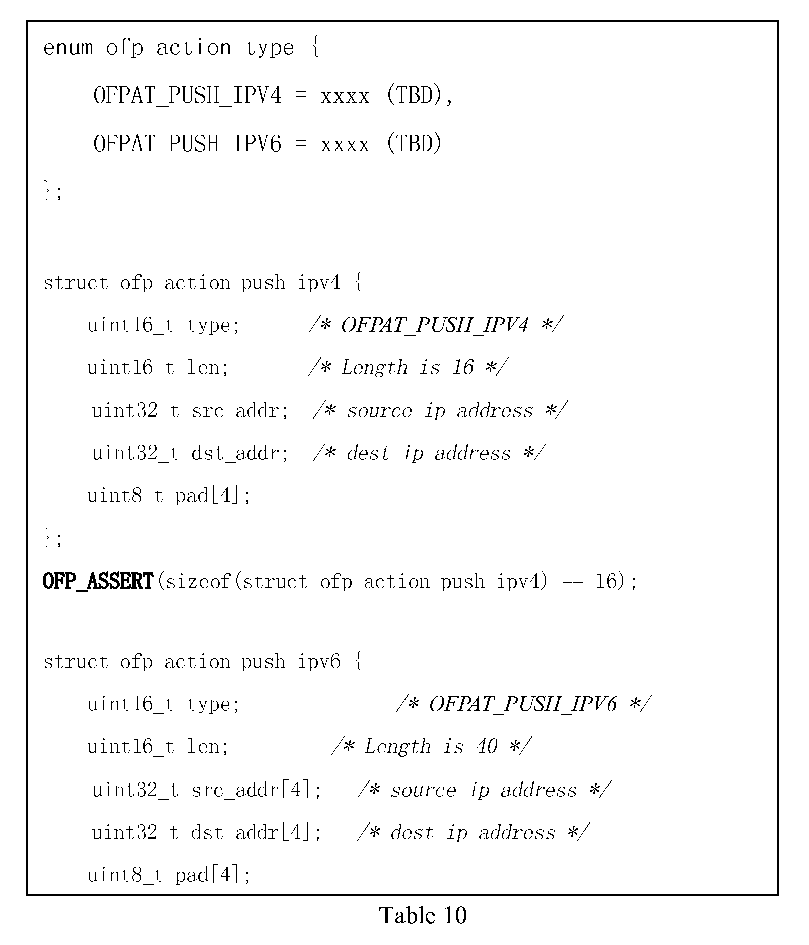

Table 11 provides exemplary instructions for pop actions used in an IP-in-IP tunnel in accordance with an embodiment of the present disclosure. When an IP header is removed, the Ethertype field in the underlying MAC or VLAN header should be updated accordingly.

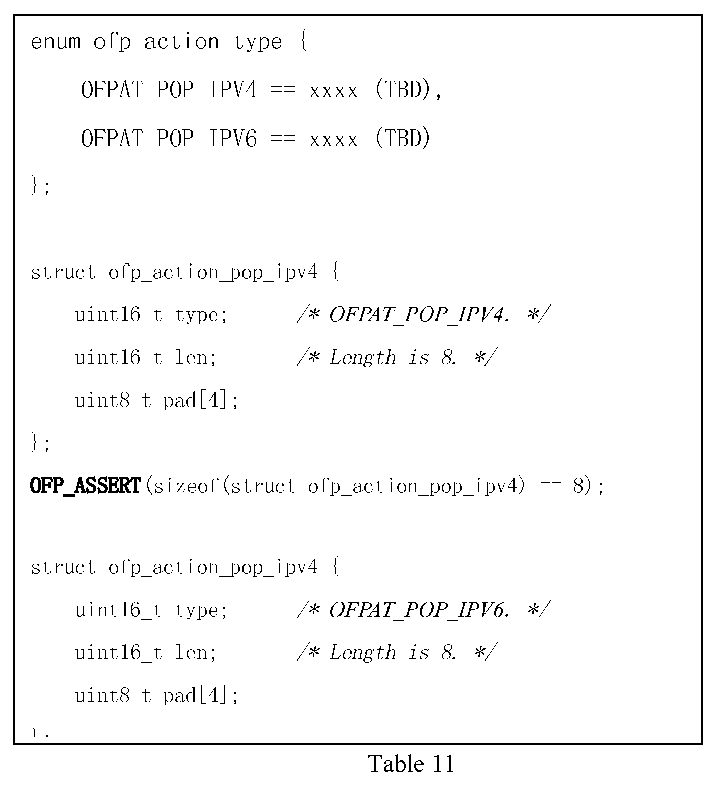

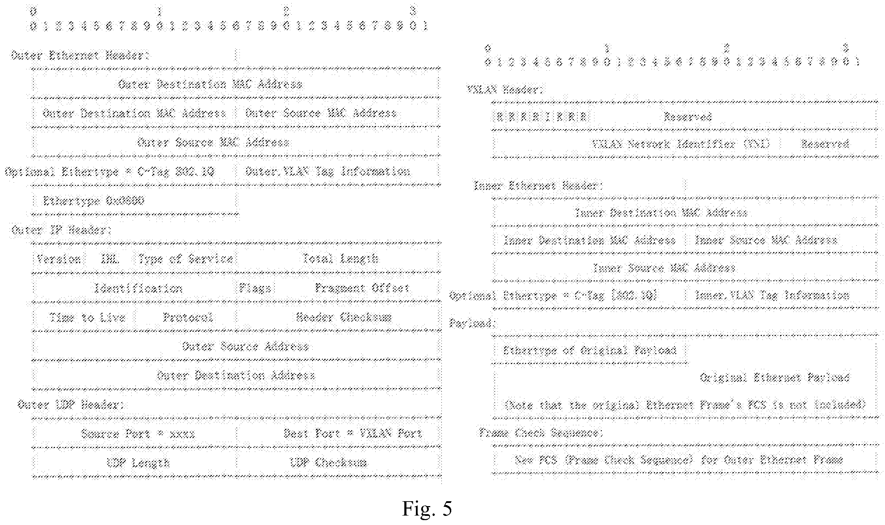

Fig. 5 illustrates VxLAN header format that can be processed in accordance with embodiment of the present disclosure. Table 12 provides exemplary tunnel encapsulation and decapsulation processes for a VXLAN tunnel packet by use of metadata.

**Table 12**

| |
|---|
| Tunnel encapsulation: |
| 1. Push_metadata: pos-1, len=8, metadata |
| 2. Push_tp: pos-1, proto=udp, src_port, dst_port |
| 3. Push_ip: pos-1, proto=udp, src_ip, dst_ip |
| 4. Push_vlan: pos-1, vlanid, priority, ethertype=0x800 |
| 5. Push_mac: src_mac, dst_mac, ethertype=0x8100 |
| Tunnel decapsulation: |
| 1. Pop_mac |
| 2. Pop_vlan: pos=1 |
| 3. Pop_ip: pos-1, af=ipv4 |
| 4. Pop_tp: pos-1, proto=udp |
| 5. Metadata_to_flow: pos-1, offset=4, len=3, mask=0xFFFFFF |

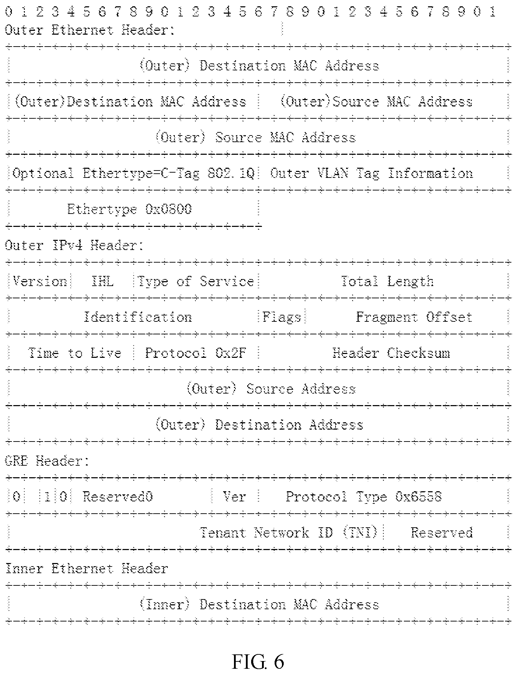

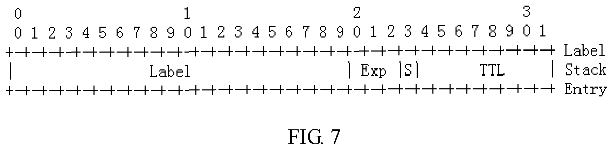

Fig. 6 illustrates NVGRE header format that can be processed in accordance with embodiment of the present disclosure. Fig. 7 illustrates MPLS header format that can be processed in accordance with embodiment of the present disclosure.

In the embodiments of the present invention, GRE may be fully spelled as Generic Routing Encapsulation in English, and GRE may be the abbreviation of generic routing encapsulation in English. MPLS may be fully spelled as Multiprotocol Label Switching in English, and MPLS may be the abbreviation of Multiprotocol Label Switching in English. IP may be fully spelled as Internet Protocol in English, and IP may be the abbreviation of Internet Protocol in English. VXLAN may be fully spelled as Virtual Extensible Local Area Network in English, and VXLAN may be the abbreviation of Virtual Extensible Local Area Network in English. NVGRE may be fully spelled as Network Virtualization using Generic Routing Encapsulation in English, and NVGRE may be the abbreviation of Network Virtualization using Generic Routing Encapsulation in English. IPv4 may be fully spelled as Internet Protocol version 4 in English, and IPv4 may be the abbreviation of Internet Protocol version 4 in English. IPv6 may be fully spelled as Internet Protocol version 6 in English, and IPv6 may be the abbreviation of Internet Protocol version 6 in English. PBB may be fully spelled as Provider Backbone Bridge in English, and PBB may be the abbreviation of Provider Backbone Bridge in English.

In the embodiments of the present invention, GPRS may be fully spelled as general packet radio service in English, and GPRS may be the abbreviation of general packet radio service in English. PPPoE may be fully spelled as Point-to-Point Protocol over Ethernet in English, and PPPoE may be the abbreviation of Point-to-Point Protocol over Ethernet in English. CAPWAP may be fully spelled as Control And Provisioning of Wireless Access Points in English, and CAPWAP may be the abbreviation of Control And Provisioning of Wireless Access Points in English. MAC may be fully spelled as Media Access Control in English, and MAC may be the abbreviation of Media Access Control in English. VLAN may be fully spelled as virtual local area network in English, and VLAN may be the abbreviation of virtual local area network in English. TTL may be fully spelled as time to live in English, and TTL may be the abbreviation of time to live in English. TCP may be fully spelled as Transmission Control Protocol in English, and TCP may be the abbreviation of Transmission Control Protocol in English. UDP may be fully spelled as User Datagram Protocol in English, and UDP may be the abbreviation of User Datagram Protocol in English.

In the embodiments of the present invention, API may be fully spelled as application programming interface in English, and API may be the abbreviation of application programming interface in English. TNI may be fully spelled as Tenant Network Identifier in English, and TNI may be the abbreviation of Tenant Network Identifier in English. VNI may be fully spelled as VXLAN Network Identifier in English, and VNI may be the abbreviation of VXLAN Network Identifier in English. I-SID may be fully spelled as Backbone Service Instance Identifier in English, and I-SID may be the abbreviation of Backbone Service Instance Identifier in English. DS-Lite may be fully spelled as Dual Stack Lite in English, and DS-Lite may be the abbreviation of Dual Stack Lite in English. MAP-E may be fully spelled as Mapping of Address and Port with Encapsulation in English, and MAP-E may be the abbreviation of Mapping of Address and Port with Encapsulation in English. LW4over6 may be fully spelled as light weight 4 over 6 in English, and LW4over6 may be the abbreviation of light weight 4 over 6 in English. 4RD may be fully spelled as IPv4 Residual Deployment in English, and 4RD may be the abbreviation of IPv4 Residual Deployment in English. 6RD may be fully spelled as IPv6 Rapid Deployment in English, and 6RD may be the abbreviation of IPv6 Rapid Deployment in English.

A person of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes: any medium that can store program code, such as a ROM, a RAM, a magnetic disk, or an optical disc.

The foregoing descriptions are merely exemplary specific embodiments of the present invention, but are not intended to limit the protection scope of the present invention.

## Claims

1. A communication method for packet tunneling through a software defined network, SDN, the method comprising:
receiving, by an SDN controller, programmable instructions, wherein the programmable instructions comprise primitive operations regarding processing a packet for tunneling in accordance with a tunneling protocol; and
configuring, by the SDN controller, a flow table in accordance with the programmable instructions;
wherein the primitive operations comprise pushing metadata operations for an SDN switch at a tunnel entry point, and/or popping metadata operations for an SDN switch at a tunnel exit point, wherein the metadata comprise information for processing a packet for tunneling.

2. The method according to claim 1, wherein the tunneling protocol is selected from a group consisting of MPLS, PBB, IPv4-in-IPv6, IPv6-in-IPv4, GRE, VXLAN, NVGRE, GPRS, PPPoE, and CAPWAP.

3. A software defined network, SDN, controller, wherein the SDN controller is configured to:
receive programmable instructions, wherein the programmable instructions comprise primitive operations regarding processing a packet for tunneling in accordance with a tunneling protocol; and
configure a flow table in accordance with the programmable instructions,
wherein the primitive operations comprise pushing metadata operations for an SDN switch at a tunnel entry point, and/or popping metadata operations for an SDN switch at a tunnel exit point, wherein the metadata comprise information for processing a packet for tunneling.

4. A system for tunneling used in a software defined network, SDN, comprising:
an SDN controller, configured to receive programmable instructions, wherein the programmable instructions comprise primitive operations regarding processing a packet for tunneling in accordance with a tunneling protocol;
the SDN controller is further configured to configure a flow table in accordance with the programmable instructions; the system further comprising:
an SDN switch, coupled to the SDN controller and configured to perform actions based on the flow table to distribute the packet in accordance with the tunneling protocol through the SDN network,
wherein the primitive operations comprise pushing metadata operations for an SDN switch at a tunnel entry point, and/or popping metadata operations for an SDN switch at a tunnel exit point, wherein the metadata comprise information for processing a packet for tunneling.

5. The system according to claim 4, wherein the instructions are independent of the SDN switch.

6. The system according to claim 4, wherein the tunneling protocol is selected from a group consisting of MPLS, PBB, IPv4-in-IPv6, IPv6-in-IPv4, GRE, VXLAN, NVGRE, GPRS, PPPoE, and CAPWAP.

## Patentansprüche

1. Kommunikationsverfahren zum Paket-"Tunneling" durch ein softwaredefiniertes Netzwerk bzw. SDN, wobei das Verfahren Folgendes umfasst:
Empfangen, durch eine SDN-Steuerung, von programmierbaren Anweisungen, wobei die programmierbaren Anweisungen primitive Operationen bezüglich einer Bearbeitung eines Pakets zum "Tunneling" gemäß einem "Tunneling"-Protokoll umfassen; und
Konfigurieren, durch die SDN-Steuerung, einer Flusstabelle gemäß den programmierbaren Anweisungen;
wobei die primitiven Operationen "Pushing"-Metadatenoperationen für einen SDN-Switch an einem Tunneleintrittspunkt und/oder "Popping"-Metadatenoperationen für einen SDN-Switch an einem Tunnelaustrittspunkt umfassen, wobei die Metadaten Informationen zur Bearbeitung eines Pakets zum "Tunneling" umfassen.

2. Verfahren nach Anspruch 1, wobei das "Tunneling"-Protokoll aus einer Gruppe ausgewählt wird, die aus MPLS, PBB, IPv4-in-IPv6, IPv6-in-IPv4, GRE, VXLAN, NVGRE, GPRS, PPPoE und CAPWAP besteht.

3. Steuerung eines softwaredefinierten Netzwerks bzw. SDN-Steuerung, wobei die SDN-Steuerung konfiguriert ist zum:
Empfangen von programmierbaren Anweisungen, wobei die programmierbaren Anweisungen primitive Operationen bezüglich einer Bearbeitung eines Pakets zum "Tunneling" gemäß einem "Tunneling"-Protokoll umfassen; und
Konfigurieren einer Flusstabelle gemäß den programmierbaren Anweisungen,
wobei die primitiven Operationen "Pushing"-Metadatenoperationen für einen SDN-Switch an einem Tunneleintrittspunkt und/oder "Popping"-Metadatenoperationen für einen SDN-Switch an einem Tunnelaustrittspunkt umfassen, wobei die Metadaten Informationen zur Bearbeitung eines Pakets zum "Tunneling" umfassen.

4. System zum "Tunneling", das in einem softwaredefinierten Netzwerk bzw. SDN verwendet wird, umfassend:
eine SDN-Steuerung, die konfiguriert ist zum Empfangen von programmierbaren Anweisungen, wobei die programmierbaren Anweisungen primitive Operationen bezüglich einer Bearbeitung eines Pakets zum "Tunneling" gemäß einem "Tunneling"-Protokoll umfassen;
die SDN-Steuerung ist ferner konfiguriert zum Konfigurieren einer Flusstabelle gemäß den programmierbaren Anweisungen; wobei das System ferner Folgendes umfasst:
einen SDN-Switch, der mit der SDN-Steuerung gekoppelt ist und konfiguriert ist zum Durchführen von Handlungen basierend auf der Flusstabelle, so dass das Paket gemäß dem "Tunneling"-Protokoll im SDN-Netzwerk verteilt wird,
wobei die primitiven Operationen "Pushing"-Metadatenoperationen für einen SDN-Switch an einem Tunneleintrittspunkt und/oder "Popping"-Metadatenoperationen für einen SDN-Switch an einem Tunnelaustrittspunkt umfassen, wobei die Metadaten Informationen zur Bearbeitung eines Pakets zum "Tunneling" umfassen.

5. System nach Anspruch 4, wobei die Anweisungen unabhängig vom SDN-Switch sind.

6. System nach Anspruch 4, wobei das "Tunneling"-Protokoll aus einer Gruppe ausgewählt wird, die aus MPLS, PBB, IPv4-in-IPv6, IPv6-in-IPv4, GRE, VXLAN, NVGRE, GPRS, PPPoE und CAPWAP besteht.

## Revendications

1. Procédé de communication pour tunnelisation de paquets au travers d'un réseau défini par logiciel, SDN, le procédé comprenant :
la réception, par un contrôleur de réseau SDN, d'instructions programmables, les instructions programmables comprenant des opérations primitives se rapportant au traitement d'un paquet en vue d'une tunnelisation conforme à un protocole de tunnelisation, et
la configuration, par le contrôleur de réseau SDN, d'une table de flux conforme aux instructions programmables,
dans lequel les opérations primitives comprennent la poussée d'opérations sur des métadonnées pour un commutateur de réseau SDN au niveau d'un point d'entrée du tunnel et/ou la remontée d'opérations sur des métadonnées pour un commutateur de réseau SDN au niveau d'un point de sortie du tunnel, les métadonnées comprenant des informations permettant de traiter un paquet en vue d'une tunnelisation.

2. Procédé selon la revendication 1, dans lequel le protocole de tunnelisation est sélectionné à partir d'un groupe constitué de : MPLS, PBB, IPv4 dans IPv6, IPv6 dans IPv4, GRE, VXLAN, NVGRE, GPRS, PPPoE et CAPWAP.

3. Contrôleur de réseau défini par logiciel, SDN, le contrôleur de réseau SDN étant configuré pour :
recevoir des instructions programmables, les instructions programmables comprenant des opérations primitives se rapportant au traitement d'un paquet en vue d'une tunnelisation conforme à un protocole de tunnelisation, et
configurer une table de flux en fonction des instructions programmables,
dans lequel les opérations primitives comprennent la poussée d'opérations sur des métadonnées pour un commutateur de réseau SDN au niveau d'un point d'entrée du tunnel et/ou la remontée d'opérations sur des métadonnées pour un commutateur de réseau SDN au niveau d'un point de sortie du tunnel, les métadonnées comprenant des informations permettant de traiter un paquet en vue d'une tunnelisation.

4. Système de tunnelisation utilisé dans un réseau défini par logiciel, SDN, comprenant :
un contrôleur de réseau SDN configuré pour recevoir des instructions programmables, les instructions programmables comprenant des opérations primitives se rapportant au traitement d'un paquet en vue d'une tunnelisation conforme à un protocole de tunnelisation ;
le contrôleur de réseau SDN est en outre configuré pour configurer une table de flux en fonction des instructions programmables, le système comprenant en outre :
un commutateur de réseau SDN couplé au contrôleur de réseau SDN et configuré pour effectuer des actions fondées sur la table de flux afin de distribuer le paquet en fonction du protocole de tunnelisation au travers du réseau SDN,
dans lequel les opérations primitives comprennent la poussée d'opérations sur des métadonnées pour un commutateur de réseau SDN au niveau d'un point d'entrée du tunnel et/ou la remontée d'opérations sur des métadonnées pour un commutateur de réseau SDN au niveau d'un point de sortie du tunnel, les métadonnées comprenant des informations permettant de traiter un paquet en vue d'une tunnelisation.

5. Système selon la revendication 4, dans lequel les instructions sont indépendantes du commutateur de réseau SDN.

6. Système selon la revendication 4, dans lequel le protocole de tunnelisation est sélectionné à partir d'un groupe constitué de : MPLS, PBB, IPv4 dans IPv6, IPv6 dans IPv4, GRE, VXLAN, NVGRE, GPRS, PPPoE et CAPWAP.
